# EUROPÄISCHE PATENTSCHRIFT

(11) **EP 3 084 927 B1**
(45) Veröffentlichungstag und Bekanntmachung des Hinweises auf die Patenterteilung: **01.11.2017**
(21) Anmeldenummer: 15708471.6
(22) Anmeldetag: 26.02.2015
(51) Int. Cl.: H02K 1/32, H02K 3/14, H02K 3/24, H02K 17/20

(54) **ROTOR EINER ROTIERENDEN ELEKTRISCHEN MASCHINE**
ROTOR OF A ROTATING ELECTRIC MACHINE
ROTOR D'UNE MACHINE ÉLECTRIQUE ROTATIVE

(30) Priorität: 14.03.2014 EP 14159920
(43) Veröffentlichungstag der Anmeldung: 26.10.2016
(73) Patentinhaber: Siemens Aktiengesellschaft, 80333 München (DE)
(72) Erfinder: BALKE, Benjamin, 10589 Berlin (DE); BALZER, Christoph, 12163 Berlin (DE); SEIBICKE, Frank, 14822 Borkheide (DE)
(86) Internationale Anmeldenummer: PCT/EP2015/054074
(87) Internationale Veröffentlichungsnummer: WO 2015/135765

(56) Entgegenhaltungen:
- EP-A1- 2 398 129
- CH-A- 397 842
- DE-A1-102008 002 299
- US-A- 3 821 568
- US-A1- 2011 133 580

## Beschreibung

Die Erfindung betrifft einen Rotor einer rotierenden elektrischen Maschine.

Insbesondere betrifft die Erfindung einen Rotor einer rotierenden elektrischen Maschine mit einem Rotorblechpaket, das axial verlaufende Nuten aufweist, in denen magnetpolerzeugende Rotorkomponenten, insbesondere Wicklungsstäbe oder Permanentmagneten, angeordnet sind. Die Rotoren erwärmen sich im elektrischen Betrieb und werden daher gekühlt. Zur Kühlung der Rotoren werden insbesondere radiale oder axiale Belüftungen verwendet. Rotorblechpakete radial belüfteter Rotoren weisen radiale Kühlschlitze auf, durch die radial Kühlluft geleitet wird, welche die Wärme aus dem Rotorblechpaket und den magnetpolerzeugenden Rotorkomponenten abführt. Bei axial belüfteten Rotoren entfallen diese Kühlschlitze. Stattdessen werden im Rotorblechpaket axiale Kühlkanäle vorgesehen, durch welche Kühlluft strömen kann. Man spricht in diesem Fall von einer Durchzugsbelüftung.

DE 102008002299 A1 offenbart einen Rotor eines Generators, der in einem Rotorballen angeordnete Axialnuten mit in diesen axial verlaufenden Leiterstäben mit je zwei parallel geführten, axialen Kühlkanälen aufweist.

US 2011/0133580 A1 offenbart eine rotierende elektrische Maschine mit einem Stator, in dem wenigstens ein Kühlkanal für ein Kühlmedium in der Richtung einer zentralen Achse des Stators verläuft.

DE 287 182 C offenbart Wechselstromleiter elektrischer Maschinen mit verminderter Stromverdrängung, die in Nuten des wirksamen Eisens eingebettet sind und exzentrische Hohlkanäle aufweisen, die nach dem Nutengrund zu angeordnet sind.

EP 2 398 129 A1 offenbart einen Generator mit einem Stator, der Nuten für eine Statorwicklung aufweist, unterhalb derer Kühlkanäle verlaufen.

WO 2004/017490 A1 offenbart einen Rotor für eine elektrische Maschine, bei welchem axiale Leiter (3) der Rotor-Erregerwicklungen in axiale Nuten (6) im Rotorkörper eingelegt und durch peripher angeordnete Mittel gegen die bei Betrieb auftretenden Kräfte gesichert sind. In den Leitern können axiale Kühlkanäle verlaufen.

US 3 621 315 A offenbart eine Dämpferwicklung für eine Synchronmaschine mit Nuten für die Dämpferwicklung und in den Nuten verlaufenden Kühlrohren.

CH 397 842 A offenbart eine Zweischichtdämpferwicklung für eine Synchronmaschine mit in einer Nut liegenden Stäben, die mindestens einen Kühlgaskanal enthalten.

GB 21822 A offenbart einen Stator oder Rotor einer elektrischen Maschine mit in Nuten angeordneten Leitern und Kühlkanälen.

Der Erfindung liegt die Aufgabe zugrunde, einen insbesondere hinsichtlich der Kühlung verbesserten Rotor einer rotierenden elektrischen Maschine anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Ein erfindungsgemäßer Rotor einer rotierenden elektrischen Maschine umfasst ein Rotorblechpaket mit parallel zu einer Rotorachse des Rotors verlaufenden Nuten und zu den Nuten korrespondierende magnetpolerzeugende Rotorkomponenten. Dabei ist in jeder Nut eine magnetpolerzeugende Rotorkomponente angeordnet und in jeder Nut verläuft im Bereich ihres Nutgrunds parallel zu der Rotorachse über die gesamte Längsausdehnung der Nut wenigstens ein Kühlkanal zur Durchleitung eines Kühlmediums.

Durch die in den Nuten verlaufenden Kühlkanäle wird Wärme direkt aus denjenigen Bereichen des Rotors abgeführt, in denen sich die magnetpolerzeugenden Rotorkomponenten befinden. Diese Kühlung des Rotors berücksichtigt vorteilhaft, dass Wärme im Rotor vor allem in den Bereichen der dieser Rotorkomponenten entsteht und eine direkte Wärmeabführung aus diesen Bereichen daher eine besonders effektive Kühlung des Rotors bewirkt. Insbesondere verbessert dies die Kühlung des Rotors gegenüber bekannten Kühlsystemen mit axial in dem Rotorblechpaket angeordneten Kühlkanälen, die in keinem direkten Kontakt mit magnetpolerzeugenden Rotorkomponenten stehen, so dass die an den magnetpolerzeugenden Rotorkomponenten entstehende Wärme über Konvektion zunächst an die diese Rotorkomponenten umgebenden Bereiche des Rotorblechpaketes übertragen und dann durch das Rotorblechpaket zu den Kühlkanälen geleitet werden muss, wodurch sich der Weg der Wärmeübertragung zu den Kühlkanälen verlängert und die Kühleffektivität beeinträchtigt wird.

Die Erfindung verbessert insgesamt die Kühlung des Rotors und ermöglicht dadurch auch eine axiale Verlängerung des Rotors, da die Länge eines Rotors durch die abführbare Verlustwärme limitiert und daher durch eine Verbesserung der Kühlung des Rotors erweiterbar ist.

Dabei ist ein nutgrundseitiger Endabschnitt jeder magnetpolerzeugenden Rotorkomponente als ein zu dem Nutgrund der diese Rotorkomponente enthaltenden Nut reichender über die gesamte Längsausdehnung der Nut verlaufender Kühlsteg ausgebildet, so dass in der Nut auf jeder Seite des Kühlsteges ein einen Kühlkanal bildender Hohlraum entsteht.

Dadurch wird vorteilhaft auf einfache und damit kostengünstige Weise, nämlich allein durch die Ausbildung der magnetpolerzeugenden Rotorkomponenten Kühlkanale in jeder Nut erzeugt. Die Ausbildung der Endabschnitte der magnetpolerzeugenden Rotorkomponenten als zu den Nutgründen reichende Kühlstege stabilisiert dabei ferner vorteilhaft die Anordnung dieser Rotorkomponenten in den Nuten und vergrößert außerdem vorteilhaft deren wirksame Kühloberflächen.

Eine Ausgestaltung der Erfindung sieht vor, dass die Nuten jeweils eine Nutöffnung zu einer Außenseite des Rotors aufweisen, wobei die Nutöffnung schmaler als ein im Inneren des Rotorblechpaketes liegender Nutabschnitt ist. Vorzugsweise füllt dabei jede magnetpolerzeugende Rotorkomponente die sie enthaltende Nut mit Ausnahme der Kühlkanäle und der Nutöffnung vollständig aus. Dadurch werden die magnetpolerzeugenden Rotorkomponenten vorteilhaft in den Nuten gehalten und stabilisiert.

Weitere Ausgestaltungen der Erfindung sehen vor, dass jede magnetpolerzeugende Rotorkomponente entweder als ein Wicklungsstab, beispielsweise als eine profilierte Kupferstange, oder als ein Permanentmagnet ausgebildet ist.

Die Erfindung sieht ferner die Verwendung eines erfindungsgemäßen Rotors insbesondere als Rotor einer rotierenden elektrischen Maschine einer Propellergondel, die auch als Pod-Antrieb bezeichnet wird, vor.

Diese Verwendung erfindungsgemäßer Rotoren ist insbesondere für Propellergondeln von Wasserfahrzeugen vorteilhaft, bei denen die Propellergondeln direkt im Wasser liegen, da dafür schlank ausgebildete Rotoren strömungstechnisch besonders bevorzugt sind und die Erfindung aus oben genannten Gründen die Konstruktion längerer und damit bei gleicher Leistung schmalerer Rotoren ermöglicht. Dabei wird vorteilhaft ausgenutzt, dass die axiale Länge einer Propellergondel im Unterschied zu ihrem Durchmesser den hydrodynamischen Wirkungsgrad nicht beeinträchtigt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch und ausschnittsweise ein erstes Ausführungsbeispiel eines Rotors einer rotierenden elektrischen Maschine in einer Querschnittsdarstellung, und
- FIG 2: schematisch und ausschnittsweise ein zweites Ausführungsbeispiel eines Rotors einer rotierenden elektrischen Maschine in einer Querschnittsdarstellung.

Einander entsprechende Teile sind in den Figuren mit den gleichen Bezugszeichen versehen.

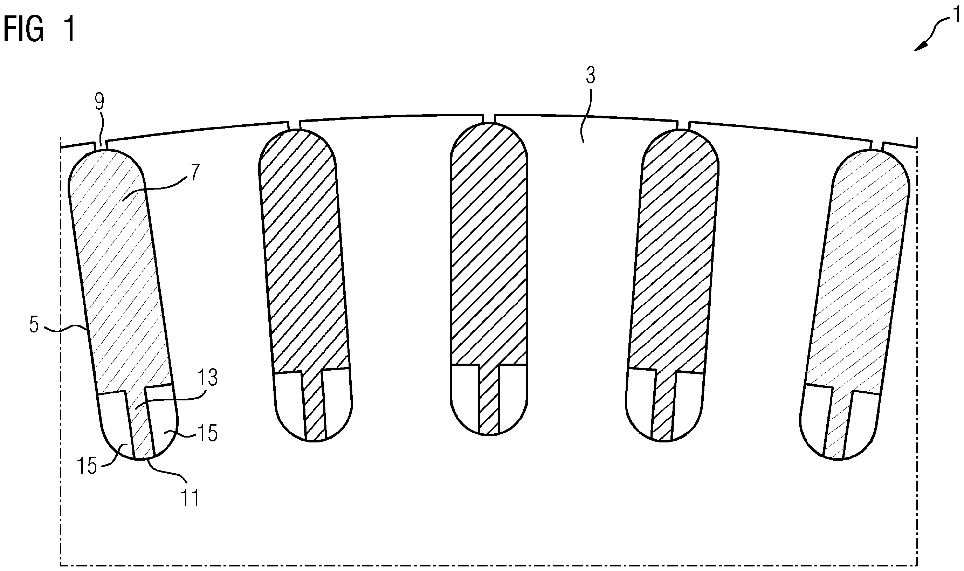

FIG 1 zeigt schematisch und ausschnittsweise ein erstes Ausführungsbeispiel eines Rotors 1 einer rotierenden elektrischen Maschine in einer Querschnittsdarstellung mit einer zu einer Rotorachse orthogonalen Schnittebene. Die Rotorachse definiert eine zu ihr parallele axiale Richtung.

Der Rotor 1 weist ein Rotorblechpaket 3 mit parallel zu der Rotorachse verlaufenden Nuten 5 auf. In jeder Nut 5 ist eine zu der Nut 5 korrespondierende magnetpolerzeugende Rotorkomponente 7 angeordnet, die sich über die gesamte Längsausdehnung der Nut 5 erstreckt.

Die Nuten 5 weisen jeweils eine Nutöffnung 9 zu einer Außenseite des Rotors 1 auf, wobei die Nutöffnung 9 schmaler als ein im Inneren des Rotorblechpaketes 3 liegender Nutabschnitt ist.

Ein nutgrundseitiger Endabschnitt jeder magnetpolerzeugenden Rotorkomponente 7 ist als ein zu dem Nutgrund 11 der diese Rotorkomponente 7 enthaltenden Nut 5 reichender über die gesamte Längsausdehnung der Nut verlaufender Kühlsteg 13 ausgebildet, so dass in der Nut 5 auf jeder Seite des Kühlsteges 13 ein Hohlraum entsteht, der einen Kühlkanal 15 zur Durchleitung eines Kühlmediums bildet.

Jede magnetpolerzeugende Rotorkomponente 7 füllt die sie enthaltende Nut 5 mit Ausnahme der Kühlkanäle 15 und der Nutöffnung 9 vollständig aus und ist beispielsweise als ein Wicklungsstab, insbesondere als eine profilierte Kupferstange, oder als ein Permanentmagnet ausgebildet.

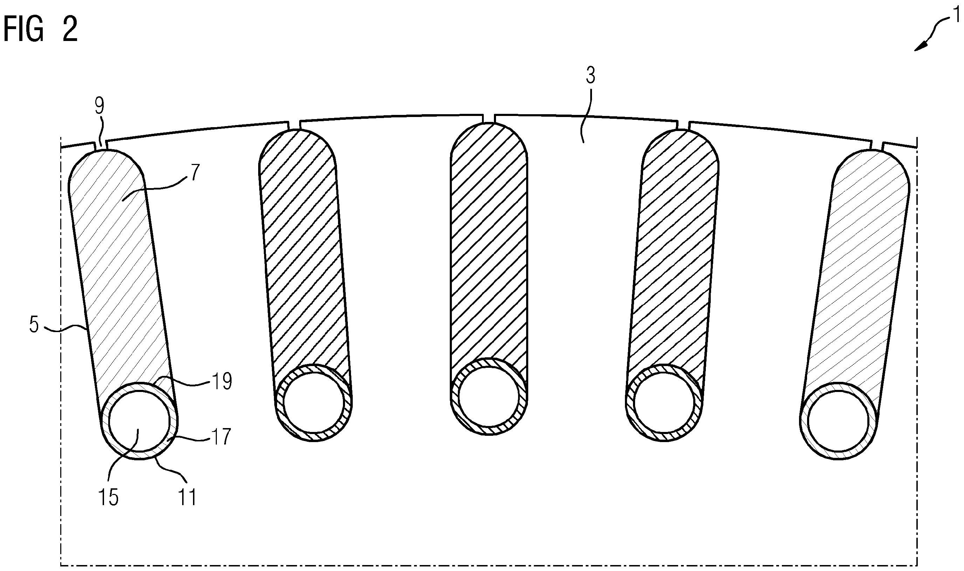

FIG 2 zeigt schematisch und ausschnittsweise ein zweites Ausführungsbeispiel eines Rotors 1 einer rotierenden elektrischen Maschine in einer Querschnittsdarstellung mit einer zu einer Rotorachse orthogonalen Schnittebene.

Dieses Ausführungsbeispiel unterscheidet sich von dem in FIG 1 dargestellten ersten Ausführungsbeispiel lediglich durch die Ausbildung der magnetpolerzeugenden Rotorkomponenten 7 und dadurch, dass in jeder Nut 5 ein Kühlkanalrohr 17 angeordnet ist.

Jedes Kühlkanalrohr 17 ist an dem Nutgrund 11 einer Nut 5 angeordnet, erstreckt sich parallel zu der Rotorachse über die gesamte Längsausdehnung der Nut 5 und liegt flächig an dem Nutgrund 11 und der in der Nut 5 angeordneten Rotorkomponente 7 an. Dazu weist jede Rotorkomponente 7 eine Rotorkomponentennut 19 auf, die ein Kühlkanalrohr 17 teilumfänglich umschließt, und der nutgrundseitige Teil der Außenoberfläche eines Kühlkanalrohres 17 korrespondiert zu der Form des Nutgrundes 11 einer Nut 5.

Im in FIG 2 dargestellten Ausführungsbeispiel ist jedes Kühlkanalrohr 17 als ein Hohlzylinder mit einer kreisförmigen Querschnittsfläche ausgebildet. Entsprechend weisen der Nutgrund 11 einer Nut 5 und die Rotorkomponentennut 19 in einer zu der Rotorachse orthogonalen Ebene halbkreisförmige Konturen auf, deren Radien zu dem Radius der kreiszylinderförmigen Außenoberfläche eines Kühlkanalrohres 17 korrespondieren.

Die Kühlkanalrohre 17 sind vorzugsweise aus demselben Material wie die Rotorkomponente 7, beispielsweise aus Kupfer, gefertigt und definieren einen durch sie hindurch verlaufenden Kühlkanal 15 zur Durchleitung eines Kühlmediums, beispielsweise zur Durchleitung von Wasser, Öl oder Luft.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Rotor (1) einer rotierenden elektrischen Maschine, umfassend
- ein Rotorblechpaket (3) mit parallel zu einer Rotorachse des Rotors (1) verlaufenden Nuten (5)
- und zu den Nuten (5) korrespondierende magnetpolerzeugende Rotorkomponenten (7),
- wobei in jeder Nut (5) eine magnetpolerzeugende Rotorkomponente (7) angeordnet ist
- und in jeder Nut (5) im Bereich ihres Nutgrunds (11) parallel zu der Rotorachse über die gesamte Längsausdehnung der Nut (5) wenigstens ein Kühlkanal (15) zur Durchleitung eines Kühlmediums verläuft,
**dadurch gekennzeichnet, dass** ein nutgrundseitiger Endabschnitt jeder magnetpolerzeugenden Rotorkomponente (7) als ein zu dem Nutgrund (11) der diese Rotorkomponente (7) enthaltenden Nut (5) reichender über die gesamte Längsausdehnung der Nut (5) verlaufender Kühlsteg (13) ausgebildet ist, so dass in der Nut (5) auf jeder Seite des Kühlsteges (13) ein einen Kühlkanal (15) bildender Hohlraum entsteht.

2. Rotor (1) nach Anspruch 1,
**dadurch gekennzeichnet, dass** die Nuten (5) jeweils eine Nutöffnung (9) zu einer Außenseite des Rotors (1) aufweisen, wobei die Nutöffnung (9) schmaler als ein im Inneren des Rotorblechpaketes (3) liegender Nutabschnitt ist.

3. Rotor (1) nach Anspruch 2,
**dadurch gekennzeichnet, dass** jede magnetpolerzeugende Rotorkomponente (7) die sie enthaltende Nut (5) mit Ausnahme der Kühlkanäle (15) und der Nutöffnung (9) vollständig ausfüllt.

4. Rotor nach einem der vorhergehenden Ansprüche,
**dadurch gekennzeichnet, dass** jede magnetpolerzeugende Rotorkomponente (7) als ein Wicklungsstab ausgebildet ist.

5. Rotor (1) nach einem der vorhergehenden Ansprüche, **dadurch gekennzeichnet, dass** jeder Wicklungsstab als eine profilierte Kupferstange ausgebildet ist.

6. Rotor nach einem der Ansprüche 1 bis 3,
**dadurch gekennzeichnet, dass** jede magnetpolerzeugende Rotorkomponente (7) als ein Permanentmagnet ausgebildet ist.

7. Propellergondel mit einer rotierenden elektrischen Maschine, die einen Rotor (1) gemäß einem der vorhergehenden Ansprüche aufweist.

## Claims

1. Rotor (1) of a rotating electric machine, comprising
- a rotor laminated core (3) with grooves (5) running in parallel with an axis of rotation of the rotor (1)
- and rotor components (7) generating magnetic poles, which rotor components (7) correspond to the grooves (5),
- wherein a rotor component (7) generating magnetic poles is arranged in each groove (5)
- and at least one cooling duct (15) for the passage of a coolant runs in each groove (5) in the region of its groove base (11) in parallel with the rotor axis over the entire longitudinal extension of the groove (5),
**characterised in that** an end section on the groove base side of each rotor component (7) generating magnetic poles is embodied as a cooling web (13) which reaches the groove base (11) of the groove (5) containing this rotor component (7) and runs along the entire longitudinal extension of the groove (5), so that a hollow chamber forming a cooling duct (15) arises in the groove (5) on each side of the cooling web (13).

2. Rotor (1) according to claim 1,
**characterised in that** the grooves (5) in each case have a groove opening (9) to an outer side of the rotor (1), wherein the groove opening (9) is narrower than a groove section lying in the interior of the rotor laminated core (3).

3. Rotor (1) according to claim 2,
**characterised in that** each rotor component (7) generating magnetic poles occupies the entirety of the groove (5) which contains it, with the exception of the cooling duct (15) and the groove opening (9).

4. Rotor according to one of the preceding claims,
**characterised in that** each rotor component (7) generating magnetic poles is embodied as a winding bar.

5. Rotor (1) according to one of the preceding claims,
**characterised in that** each winding bar is embodied as a profiled copper rod.

6. Rotor according to one of claims 1 to 3,
**characterised in that** each rotor component (7) generating magnetic poles is embodied as a permanent magnet.

7. Propeller nacelle with a rotating electric machine, which has a rotor (1) according to one of the preceding claims.

## Revendications

1. Rotor (1) d'une machine électrique tournante, comprenant
- un paquet (3) de tôles rotoriques ayant des encoches (5) s'étendant parallèlement à un axe du rotor (1),
- et des composants (7) du rotor produisant des pôles magnétiques et correspondant aux encoches (5),
- dans lequel un composant (7) du rotor produisant un pôle magnétique est disposé dans chaque encoche (5),
- et, dans chaque encoche (5), dans la partie de son fond (11), s'étend, parallèlement à l'axe du rotor sur toute l'étendue longitudinale de l'encoche (5), au moins un conduit (15) de refroidissement pour le passage d'un fluide de refroidissement,
**caractérisé en ce qu'**un tronçon d'extrémité, du côté du fond de l'encoche, de chaque composant (7) du rotor produisant un pôle magnétique est constitué sous la forme d'une réglette (13) de refroidissement s'étendant sur toute l'étendue longitudinale de l'encoche (5) en allant jusqu'au fond (11) de l'encoche (5) contenant ce composant (7) du rotor, de manière à créer, dans l'encoche (5), de chaque côté de la réglette (13) de refroidissement, un espace vide formant un conduit (15) de refroidissement.

2. Rotor (1) suivant la revendication 1,
**caractérisé en ce que** les encoches (5) ont une ouverture (9) vers un côté extérieur du rotor (1), l'ouverture (9) de l'encoche étant plus étroite qu'un tronçon de l'encoche se trouvant à l'intérieur du paquet (3) de tôles rotoriques.

3. Rotor (1) suivant la revendication 2,
**caractérisé en ce que** chaque composant (7) du rotor produisant un pôle magnétique remplit complètement l'encoche (5) le contenant, à l'exception des conduits (15) de refroidissement et de l'ouverture (9) de l'encoche.

4. Rotor suivant l'une des revendications précédentes,
**caractérisé en ce que** chaque composant (7) du rotor produisant un pôle magnétique est constitué sous la forme d'un barreau à enroulement.

5. Rotor (1) suivant l'une des revendications précédentes,
**caractérisé en ce que** chaque barreau à enroulement est constitué sous la forme d'une barre de cuivre profilée.

6. Rotor suivant l'une des revendications 1 à 3,
**caractérisé en ce que** chaque composant (7) de rotor produisant un pôle magnétique est constitué sous la forme d'un aimant permanent.

7. Gondole d'hélice ayant une machine électrique tournante, qui a un rotor (1) suivant l'une des revendications précédentes.
